# EUROPEAN PATENT APPLICATION

(11) **EP 4 270 870 A1**
(43) Date of publication of application: **01.11.2023**
(21) Application number: 23159561.2
(22) Date of filing: 02.03.2023
(51) Int. Cl.: H04L 9/40, H04W 12/00, H04W 12/062, H04W 12/069

(54) **METHOD, DEVICE AND COMPUTER READABLE MEDIUM FOR COMMUNICATIONS**

(30) Priority: 25.04.2022 IN 202241024313
(71) Applicant: Nokia Technologies Oy, 02610 Espoo (FI)
(72) Inventor: KHARE, Saurabh, Bangalore (IN); PEINADO GOMEZ, German, Warsaw (PL); LANDAIS, Bruno, Pleumeur-Bodou (FR); DAS, Prashanti, Bangalore (IN)
(74) Representative: Nokia EPO representatives

(57) **Abstract**

Embodiments of the present disclosure relate to method, device and computer readable media for communications. A first device receives, from a second device, a request for establishment of a connection between the first device and the second device. If a first set of security parameters associated with the connection is identical to a second set of security parameters associated with a previous connection which was completed between the first device and the second device, the first device performs the establishment of the connection.

## Description

### TECHNICAL FIELD

Implementations of the present disclosure generally relate to the field of telecommunication, and in particular, to a method, device and computer readable medium for communications.

### BACKGROUND

Third Generation Partnership Project (3GPP) Technical Specification Group Core Network and Terminal (CT4) defines separate N32-c Transport Layer Security (TLS) connection and N32-f TLS connection in the CT4 specifications.

### SUMMARY

In general, example implementations of the present disclosure provide a method, device and computer readable medium for communications.

In a first aspect, there is provided a first device. The first device comprises at least one processor and at least one memory including computer program codes. The at least one memory and the computer program codes are configured to, with the at least one processor, cause the first device to: receive, from a second device, a request for establishment of a connection between the first device and the second device; and in accordance with a determination that a first set of security parameters associated with the connection is identical to a second set of security parameters associated with a previous connection which was completed between the first device and the second device, perform the establishment of the connection.

In a second aspect, there is provided a method implemented at a first device. The method comprises: receiving, at the first device from a second device, a request for establishment of a connection between the first device and the second device; and in accordance with a determination that a first set of security parameters associated with the connection is identical to a second set of security parameters associated with a previous connection which was completed between the first device and the second device, performing the establishment of the connection.

In a third aspect, there is provided an apparatus. The apparatus comprises: means for receiving, from a second device, a request for establishment of a connection between the first device and the second device; and in accordance with a determination that a first set of security parameters associated with the connection is identical to a second set of security parameters associated with a previous connection which was completed between the first apparatus and the second device, means for performing the establishment of the connection.

In a fourth aspect, there is provided a non-transitory computer readable medium. The non-transitory computer readable medium comprises program instructions for causing an apparatus to perform the method according to the second aspect.

It is to be understood that the summary section is not intended to identify key or essential features of implementations of the present disclosure, nor is it intended to be used to limit the scope of the present disclosure. Other features of the present disclosure will become easily comprehensible through the following description.

### BRIEF DESCRIPTION OF THE DRAWINGS

Through the more detailed description of some implementations of the present disclosure in the accompanying drawings, the above and other objects, features and advantages of the present disclosure will become more apparent, wherein:
Fig. 1 illustrates an example communication environment in which implementations of the present disclosure can be implemented;
Fig. 2 illustrates a signaling chart illustrating a process for strengthening connection security according to some example implementations of the present disclosure;
Fig. 3 illustrates a flowchart of an example method in accordance with some implementations of the present disclosure;
Fig. 4 illustrates a simplified block diagram of an apparatus that is suitable for implementing embodiments of the present disclosure; and
Fig. 5 illustrates a block diagram of an example computer readable medium in accordance with some example embodiments of the present disclosure.

Throughout the drawings, the same or similar reference numerals represent the same or similar element.

### DETAILED DESCRIPTION

Principle of the present disclosure will now be described with reference to some example implementations. It is to be understood that these implementations are described only for the purpose of illustration and help those skilled in the art to understand and implement the present disclosure, without suggesting any limitation as to the scope of the disclosure. The disclosure described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other implementations whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example implementations. As used herein, the term "and/or" includes any and all combinations of one or more of the listed terms.

The terminology used herein is for the purpose of describing particular implementations only and is not intended to be limiting of example implementations. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the future fifth generation (5G) communication protocols, and/or any other protocols either currently known or to be developed in the future. Implementations of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), a NR Next Generation NodeB (gNB), a Remote Radio Unit (RRU), a radio header (RH), a remote radio head (RRH), Integrated Access and Backhaul (IAB) node, a relay, a low power node such as a femto, a pico, and so forth, depending on the applied terminology and technology. The network device is allowed to be defined as part of a gNB such as for example in CU/DU split in which case the network device is defined to be either a gNB-CU or a gNB-DU.

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (loT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. In the following description, the terms "terminal device", "communication device", "terminal", "user equipment" and "UE" may be used interchangeably.

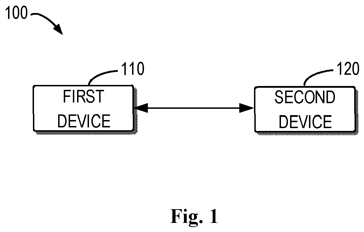

Fig. 1 illustrates a schematic diagram of an example communication environment 100 in which implementations of the present disclosure can be implemented. As shown in Fig. 1, the communication environment 100 may include a first device 110 and a second device 120.

In some embodiments, the communication environment 100 may comprise different Public Land Mobile Networks (PLMNs). The internetwork interconnect allows secure communication between service-consuming and a service-producing Network Functions (NFs) in different PLMNs. Security is enabled by Security Edge Protection Proxies (SEPPs) of both networks. In such embodiments, each of the first device 110 and the second device 120 may be implemented as an SEPP. The SEPPs enforce protection policies regarding application layer security thereby ensuring integrity and confidentiality protection for those elements to be protected. In some embodiments, there may be interconnect providers (IPX, not shown) between the SEPPs.

In some embodiments, communication between the first device 110 and the second device 120 may be over an interconnect (N32) interface. In some embodiments, the N32 interface may comprise a first type of connection and a second type of connection. The first type of connection may be used for management of a communication interface between the first device 110 and the second device 120. The second type of connection may be used for transmission of protected messages between the first device 110 and the second device 120. Just by way of example, the first type of connection may be an N32-c connection, and the second type of connection may be an N32-f connection.

An N32-c connection is short-lived. In other words, the N32-c TLS connection is released after an initial N32-c handshake. When later on one of the two SEPPs needs to send a new N32-c message for an existing N32-c association (e.g. error report, N32-f context termination for PRINS, N32-f connection termination for TLS security which uses a different N32-c message), there is no security mechanism defined through which the receiving SEPP can ensure that the request is received from a legitimate and authorized sending SEPP, i.e., confirming that the SEPP that wants to modify the N32-c context is the one who created the N32-c association in first place.

In addition, assuming N32-c and N32-f separate TLS connections, an intermediary potential malicious or rogue SEPP in IPX network, with knowledge of the receiving PLMN ID and a Fully Qualified Domain Name (FQDN) of the receiving SEPP can initiate a N32-f TLS connection setup to the target SEPP and cause an attack on the target PLMN or SEPP.

Exploiting these problems, any malicious SEPP can send a new N32-c or N32-f message to the target SEPP and cause an outage or attack.

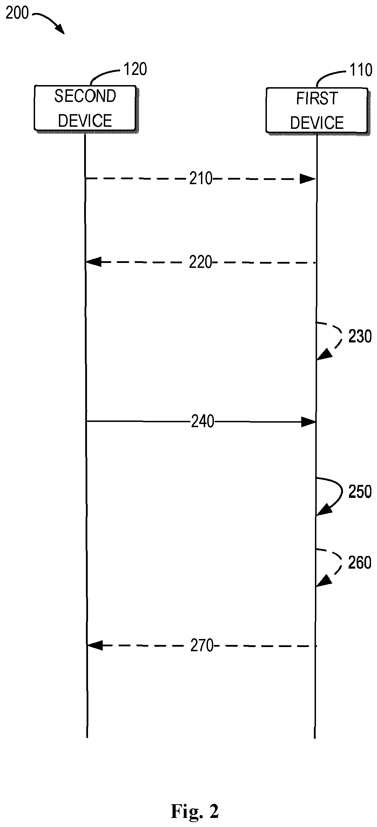

Example implementations of the present disclosure provide a solution for strengthening connection security so as to solve the above problems and one or more of other potential problems. According to the solution, when a first device receives a connection request from a second device where a previous connection was already completed between them, the first device shall determine validity or trustworthiness of the connection based on whether a first set of security parameters associated with the connection is identical to a second set of security parameters associated with the previous connection. In this way, connection security between the first device and the second device may be ensured. Hereinafter, principle of the present disclosure will be described with reference to Figs. 2 to 5.

Fig. 2 illustrates a signaling chart illustrating a process for strengthening connection security according to some example implementations of the present disclosure. The process 200 may involve the first device 110 and the second device 120 as illustrated in Fig. 1. Although the process 200 has been described in the communication environment 100 of Fig. 1, this process may be likewise applied to other communication scenarios.

As shown in Fig. 2, the first device 110 receives 240, from the second device 120, a request for establishment of a connection between the first device 110 and the second device 120.

In turn, the first device 110 determines 250 whether a first set of security parameters associated with the connection is identical to a second set of security parameters associated with a previous connection which was completed between the first device 110 and the second device 120.

If the first set of security parameters is identical to the second set of security parameters, the first device 110 performs the establishment of the connection. For example, in order to perform the establishment of the connection, the first device 110 may correlate 260 the first set of security parameters with the previous connection. In turn, the first device 110 may transmit 270 to the second device 120 a message indicating the request is allowed.

On the other hand, if the first set of security parameters is not identical to the second set of security parameters, the first device 110 may transmit to the second device 120 a message indicating the request is rejected.

With the process 200, connection security between the first device and the second device may be ensured.

In some implementations, the connection may be used for management of a communication interface between the first device 110 and the second device 120. An example of the connection may include but is not limited to the connection may be an N32-c connection.

In implementations where the connection may be the N32-c connection, the request may comprise a first subset of the first set of security parameters and an N32-c TLS certificate. The N32-c TLS certificate may comprise a second subset of the first set. In such implementations, the first device 110 may determine whether the first subset in the request is identical to the second subset in the N32-c TLS certificate. If the first subset is identical to the second subset, the first device 110 determines whether the second subset is identical to the second set of security parameters in an N32-c context which was created between the first device 110 and the second device 120. If the second subset is identical to the second set of security parameters, the first device 110 determines the first set of security parameters is identical to the second set of security parameters. In this way, the request for establishment of the connection may be correlated with the previously created N32-c context.

In such implementations, in order to create the N32-c context comprising the second set of security parameters, the first device 110 may receive 210 a SecNegotiateReqData message from the second device 120. The SecNegotiateReqData message may comprise security capabilities of the second device 120. The first device 110 may compare the received security capabilities to its own supported security capabilities and select, based on its local policy, a security mechanism, which is supported by both the first device 110 and the second device 120. In turn, the first device 110 may transmit 220 a SecNegotiateRspData message to the second device 120. The SecNegotiateRspData message may comprise the selected security mechanism for protecting the NF service related signalling over N32 interface. In addition, based on the SecNegotiateReqData message, the first device 110 may create 230 the N32-c context comprising the second set of security parameters.

In some implementations, the connection may be used for transmission of protected messages between the first device 110 and the second device 120. An example of the connection may include but is not limited to the connection may be an N32-f connection.

In implementations where the connection may be the N32-f connection, the request may comprise an N32-f TLS certificate. The N32-f TLS certificate may comprise the first set of security parameters. In such implementations, the first device 110 may determine whether the first set of security parameters in the N32-f TLS certificate is identical to the second set of security parameters in the N32-c context which was created between the first device 110 and the second device 120. If the first set of security parameters in the N32-f TLS certificate is identical to the second set of security parameters in the N32-c context, the first device 110 may correlate the N32-f connection with the N32-c connection. In turn, the first device 110 may perform the establishment of the connection.

On the other hand, if the first set of security parameters in the N32-f TLS certificate is not identical to the second set of security parameters in the N32-c context, the first device 110 may reject the request for establishment of the connection.

In some implementations, each of the first, second and third sets of security parameters comprise at least one of the following: a Public Land Mobile Network identity (PLMN ID) of the second device 120, a Standalone Non-Public Network identity of the second device, or a Fully Qualified Domain Name (FQDN) of the second device 120.

In some implementations, the request for establishment of the connection may comprise one of the following: an error report, an N32-f context termination for PRotocol for N32 INterconnect Security (PRINS), or an N32-f connection termination for TLS security.

In some implementations, the connection is a transport layer security connection.

In some implementations, the certificate is a transport layer security certificate.

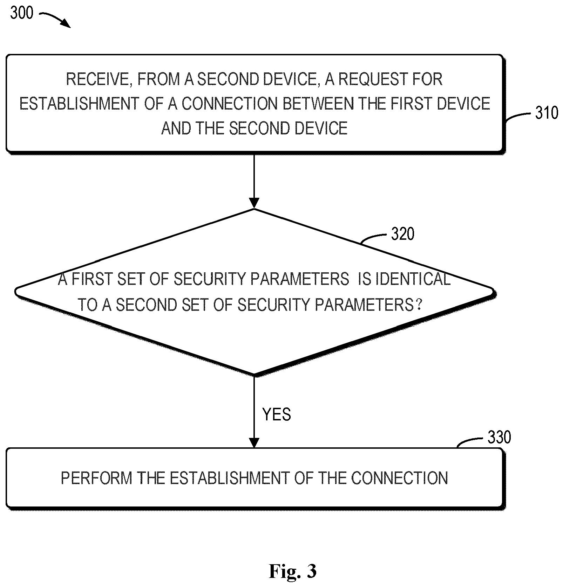

Fig. 3 shows a flowchart of an example method 300 implemented at a first device in accordance with some example embodiments of the present disclosure. For the purpose of discussion, the method 300 will be described from the perspective of the first device 110 with reference to Fig. 1.

At block 310, the first device 110 receives, from the second device 120, a request for establishment of a connection between the first device 110 and the second device 120.

At block 320, the first device 110 determines whether a first set of security parameters associated with the connection is identical to a second set of security parameters associated with a previous connection which was completed between the first device 110 and the second device 120.

If the first set of security parameters is identical to the second set of security parameters, the first device 110 performs, at block 330, the establishment of the connection.

In some implementations, the request comprises a first subset of the first set of security parameters and a certificate associated with the second device and the certificate comprises a second subset of the first set. In such implementations, the method 300 further comprises: determining whether the first subset is identical to the second subset; in accordance with a determination that the first subset is identical to the second subset, determining whether the second subset is identical to the second set of security parameters in a context which was created between the first device and the second device; and in accordance with a determination that the second subset is identical to the second set of security parameters, determining the first set of security parameters is identical to the second set of security parameters.

In some implementations, the request comprises a certificate associated with the second device and the certificate comprises the first set of security parameters. In such implementations, the method 300 further comprises: determining whether the first set of security parameters in the certificate is identical to the second set of security parameters in a context which was created between the first device and the second device.

In some implementations, the connection is used for management of a communication interface between the first device and the second device.

In some implementations, the connection is used for transmission of protected messages between the first device and the second device.

In some implementations, each of the first and second sets of security parameters comprises at least one of the following: a Public Land Mobile Network identity of the second device, a Standalone Non-Public Network identity of the second device, or a Fully Qualified Domain Name of the second device.

In some implementations, each of the first and second devices comprises a Security Edge Protection Proxy (SEPP) device.

In some implementations, the connection is a transport layer security connection.

In some implementations, the certificate is a transport layer security certificate.

In some example embodiments, an apparatus capable of performing any of the method 300 (for example, a first apparatus) may comprise means for performing the respective steps of the method 300. The means may be implemented in any suitable form. For example, the means may be implemented in a circuitry or software module.

In some example embodiments, the first apparatus comprises: means for receiving, from a second device, a request for establishment of a connection between the first device and the second device; and in accordance with a determination that a first set of security parameters associated with the connection is identical to a second set of security parameters associated with a previous connection which was completed between the first apparatus and the second device, means for performing the establishment of the connection.

In some implementations, the request comprises a first subset of the first set of security parameters and a certificate associated with the second device and the certificate comprises a second subset of the first set. In such implementations, the apparatus further comprises: means for determining whether the first subset is identical to the second subset; in accordance with a determination that the first subset is identical to the second subset, means for determining whether the second subset is identical to the second set of security parameters in a context which was created between the first device and the second device; and in accordance with a determination that the second subset is identical to the second set of security parameters, means for determining the first set of security parameters is identical to the second set of security parameters.

In some implementations, the request comprises a certificate associated with the second device and the certificate comprises the first set of security parameters. In such implementations, the apparatus further comprises: means for determining whether the first set of security parameters in the certificate is identical to the second set of security parameters in a context which was created between the first device and the second device.

In some implementations, the connection is used for management of a communication interface between the first device and the second device.

In some implementations, the connection is used for transmission of protected messages between the first device and the second device.

In some implementations, each of the first and second sets of security parameters comprises at least one of the following: a Public Land Mobile Network identity of the second device, a Standalone Non-Public Network identity of the second device, or a Fully Qualified Domain Name of the second device.

In some implementations, each of the first and second devices comprises a Security Edge Protection Proxy (SEPP) device.

In some implementations, the connection is a transport layer security connection.

In some implementations, the certificate is a transport layer security certificate.

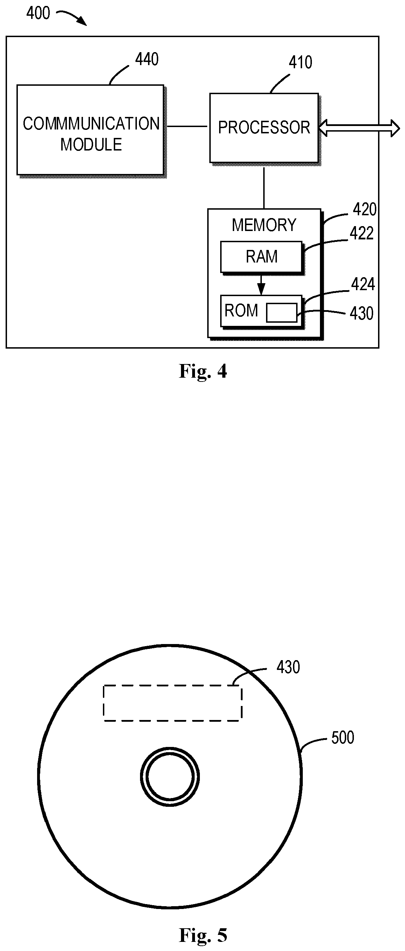

Fig. 4 is a simplified block diagram of a device 400 that is suitable for implementing embodiments of the present disclosure. The device 400 may be provided to implement the communication device, for example, the first device 110 or the second device 120 as shown in Fig. 1. As shown, the device 400 includes one or more processors 410, one or more memories 420 coupled to the processor 410, and one or more communication modules 440 coupled to the processor 410.

The communication module 440 is for bidirectional communications. The communication module 440 has at least one antenna to facilitate communication. The communication interface may represent any interface that is necessary for communication with other network elements.

The processor 410 may be of any type suitable to the local technical network and may include one or more of the following: general purpose computers, special purpose computers, microprocessors, digital signal processors (DSPs) and processors based on multicore processor architecture, as non-limiting examples. The device 400 may have multiple processors, such as an application specific integrated circuit chip that is slaved in time to a clock which synchronizes the main processor.

The memory 420 may include one or more non-volatile memories and one or more volatile memories. Examples of the non-volatile memories include, but are not limited to, a Read Only Memory (ROM) 424, an electrically programmable read only memory (EPROM), a flash memory, a hard disk, a compact disc (CD), a digital video disk (DVD), and other magnetic storage and/or optical storage. Examples of the volatile memories include, but are not limited to, a random access memory (RAM) 422 and other volatile memories that will not last in the power-down duration.

A computer program 430 includes computer executable instructions that are executed by the associated processor 410. The program 430 may be stored in the ROM 424. The processor 410 may perform any suitable actions and processing by loading the program 430 into the RAM 422.

The embodiments of the present disclosure may be implemented by means of the program 430 so that the device 400 may perform any process of the disclosure as discussed with reference to Figs. 1 to 3. The embodiments of the present disclosure may also be implemented by hardware or by a combination of software and hardware.

In some example embodiments, the program 430 may be tangibly contained in a computer readable medium which may be included in the device 400 (such as in the memory 420) or other storage devices that are accessible by the device 400. The device 400 may load the program 430 from the computer readable medium to the RAM 422 for execution. The computer readable medium may include any types of tangible non-volatile storage, such as ROM, EPROM, a flash memory, a hard disk, CD, DVD, and the like. Fig. 5 shows an example of the computer readable medium 500 in form of CD or DVD. The computer readable medium has the program 430 stored thereon.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer readable storage medium. The computer program product includes computer-executable instructions, such as those included in program modules, being executed in a device on a target real or virtual processor, to carry out the method 300 as described above with reference to Fig. 3. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program codes or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. A first device, comprising:
at least one processor; and
at least one memory including computer program code;
wherein the at least one memory and the computer program code are configured to, with the at least one processor, cause the first device to:
receive, from a second device, a request for establishment of a connection between the first device and the second device; and
in accordance with a determination that a first set of security parameters associated with the connection is identical to a second set of security parameters associated with a previous connection which was completed between the first device and the second device, perform the establishment of the connection.

2. The first device of claim 1, wherein the request comprises a first subset of the first set of security parameters and a certificate associated with the second device, the certificate comprising a second subset of the first set; and
wherein the first device is further caused to:
determine whether the first subset is identical to the second subset;
in accordance with a determination that the first subset is identical to the second subset, determine whether the second subset is identical to the second set of security parameters in a context which was created between the first device and the second device; and
in accordance with a determination that the second subset is identical to the second set of security parameters, determine the first set of security parameters is identical to the second set of security parameters.

3. The first device of claim 1, wherein the request comprises a certificate associated with the second device, the certificate comprising the first set of security parameters; and
wherein the first device is further caused to:
determine whether the first set of security parameters in the certificate is identical to the second set of security parameters in a context which was created between the first device and the second device.

4. The first device of claim 1, wherein the connection is used for management of a communication interface between the first device and the second device.

5. The first device of claim 1, wherein the connection is used for transmission of protected messages between the first device and the second device.

6. The first device of claim 1, wherein each of the first and second sets of security parameters comprises at least one of the following:
a Public Land Mobile Network identity of the second device,
a Standalone Non-Public Network identity of the second device, or
a Fully Qualified Domain Name of the second device.

7. A method, comprising:
receiving, at a first device from a second device, a request for establishment of a connection between the first device and the second device; and
in accordance with a determination that a first set of security parameters associated with the connection is identical to a second set of security parameters associated with a previous connection which was completed between the first device and the second device, performing the establishment of the connection.

8. The method of claim 7, wherein the request comprises a first subset of the first set of security parameters and a certificate associated with the second device, the certificate comprising a second subset of the first set; and
wherein the method further comprises:
determining whether the first subset is identical to the second subset;
in accordance with a determination that the first subset is identical to the second subset, determining whether the second subset is identical to the second set of security parameters in a context which was created between the first device and the second device; and
in accordance with a determination that the second subset is identical to the second set of security parameters, determining the first set of security parameters is identical to the second set of security parameters.

9. The method of claim 7, wherein the request comprises a certificate associated with the second device, the certificate comprising the first set of security parameters; and
wherein the method further comprises:
determining whether the first set of security parameters in the certificate is identical to the second set of security parameters in a context which was created between the first device and the second device.

10. The method of claim 7, wherein the connection is used for management of a communication interface between the first device and the second device.

11. The method of claim 7, wherein the connection is used for transmission of protected messages between the first device and the second device.

12. The method of claim 7, wherein each of the first and second sets of security parameters comprises at least one of the following:
a Public Land Mobile Network identity of the second device,
a Standalone Non-Public Network identity of the second device, or
a Fully Qualified Domain Name of the second device.

13. The method of any of claims 7 to 13, wherein the connection is a transport layer security connection.

14. The method of claim 8 or 9, wherein the certificate is a transport layer security certificate.

15. A computer readable medium comprising program instructions for causing an apparatus to perform at least the method of any of claims 7-14.
